# EUROPÄISCHE PATENTSCHRIFT

(11) **EP 4 541 590 B1**
(45) Veröffentlichungstag und Bekanntmachung des Hinweises auf die Patenterteilung: **09.12.2026**
(21) Anmeldenummer: 23204284.6
(22) Anmeldetag: 18.10.2023
(51) Int. Cl.: B41F 5/24, B41F 33/02

(54) **VORRICHTUNG ZUM VERMESSEN VON ERHEBUNGEN DER OBERFLÄCHE EINES ROTATIONSKÖRPERS UND VERFAHREN**
DEVICE FOR MEASURING ELEVATIONS OF THE SURFACE OF A ROTATING BODY AND METHOD
DISPOSITIF DE MESURE D'ÉLÉVATIONS DE LA SURFACE D'UN CORPS ROTATIF ET PROCÉDÉ

(43) Veröffentlichungstag der Anmeldung: 23.04.2025
(73) Patentinhaber: Heidelberger Druckmaschinen AG, 69115 Heidelberg (DE)
(72) Erfinder: Gantzke, Witold, 81247 München (DE)

(56) Entgegenhaltungen:
- EP-A1- 3 988 313
- WO-A1-2010/146040
- DE-U1- 202007 004 717

## Beschreibung

### Erfindung

Die Erfindung betrifft eine Vorrichtung zum Vermessen von Erhebungen der Oberfläche eines Rotationskörpers mit den Merkmalen des Oberbegriffs von Anspruch 1 und ein Verfahren zum Vermessen von Erhebungen der Oberfläche eines Rotationskörpers mit den Merkmalen des Oberbegriffs von Anspruch 10.

### Gebiet der Technik

Die Erfindung liegt auf dem technischen Gebiet der grafischen Industrie und dort insbesondere im Bereich des Flexodrucks, also des Betreibens einer Flexodruckmaschine, d.h. einer Rotationsdruckmaschine für das Drucken mit Flexodruckformen; und des Betreibens deren Peripheriegeräte, insbesondere eines sogenannten Mounters, in dem mehrere Flexodruckformen auf einen Zylinder oder auf eine Zylinderhülse druckjobabhängig angeordnet ("gemountet") werden. Im Besonderen liegt die Erfindung dabei auf dem Teilgebiet des exakten Vermessens von "gemounteten" Flexodruckformen, z.B. direkt in dem Mounter.

### Stand der Technik

Im Stand der Technik des technischen Gebiets sind Flexodruckmaschinen, Mounter und auch Einrichtungen zum Vermessen von Flexodruckformen während oder nach dem "Mounten" im Mounter bekannt. Zu nennen wären beispielsweise die Dokumente DE102020111341A1, EP3822080A1 und DE102005053432A1. In diesen Dokumenten wird die Kalibrierung der jeweils verwendeten Messvorrichtung erwähnt, allerdings nicht detailliert dargelegt.

Die EP 3 988 313 A1 offenbart bereits eine gattungsgemäße Vorrichtung, d.h. eine Vorrichtung zum Vermessen von Erhebungen der Oberfläche eines als Zylinder, Walze, Hülse oder Platte für eine Druckmaschine ausgebildeten Rotationskörpers mit allen Merkmalen des Oberbegriffs von Anspruch 1. Zur Kalibration wird in dem Dokument erwähnt, dass diese z.B. mittels Messringen oder einer Messhülse erfolgen kann. Die Merkmale des Kennzeichens von Anspruch 1 werden in dem Dokument dagegen nicht thematisiert.

### Technische Aufgabe

Vor diesem Hintergrund ist es eine Aufgabe der vorliegenden Erfindung, eine Verbesserung gegenüber dem Stand der Technik zu schaffen, welche es insbesondere ermöglicht, Flexodruckplatten bzw. deren mit Erhebungen ausgebildete Oberflächen exakt zu vermessen; alternativ weitere strukturierte drucktechnische Oberflächen, wie zum Beispiel Rasterwalzenoberflächen.

### Erfindungsgemäße Lösung der Aufgabe

Diese Aufgabe wird erfindungsgemäß durch eine Vorrichtung nach Anspruch 1 und ein Verfahren nach Anspruch 10 gelöst.

Vorteilhafte und daher bevorzugte Weiterbildungen der Erfindung ergeben sich aus den Unteransprüchen sowie aus der Beschreibung und den Zeichnungen.

Eine erfindungsgemäße Vorrichtung zum Vermessen von Erhebungen der Oberfläche eines als Zylinder, Walze, Hülse oder Platte für eine Druckmaschine ausgebildeten Rotationskörpers, mit einem ersten Motor zum Rotieren des Rotationskörpers um eine Rotationsachse und mit einer Messeinrichtung, wobei die Messeinrichtung zum berührungslosen Vermessen wenigstens eine Lichtquelle und mehrere und im Wesentlichen in einer parallel zur Rotationsachse ausgerichteten Reihe angeordnete Kameras mit einem jeweiligen Erfassungsbereich umfasst, zeichnet sich dadurch aus, dass die Messeinrichtung ein erstes und ein zweites Lineal umfasst, wobei das erste Lineal einer ersten Seite des Rotationskörpers angeordnet ist und eine erste Maßverkörperung trägt und das zweite Lineal auf einer gegenüberliegenden zweiten Seite des Rotationskörpers angeordnet ist und eine zweite Maßverkörperung trägt und wobei das erste Lineal wenigstens abschnittsweise in einem ersten Erfassungsbereich einer ersten Kamera und das zweite Lineal wenigstens abschnittsweise in einem zweiten Erfassungsbereich einer zweiten Kamera liegen.

Ein erfindungsgemäßes Verfahren zum Vermessen von Erhebungen der Oberfläche eines als Zylinder, Walze, Hülse oder Platte für eine Druckmaschine ausgebildeten

Rotationskörpers, zeichnet sich dadurch aus, dass eine Vorrichtung nach einem der vorhergehenden Ansprüche und mit einem Rechner zum Einsatz kommt und dass während des Vermessens beide Lineale wenigstes abschnittsweise erfasst und dabei zwei Lagewerte der Reihe der Kameras zur rechentechnischen Korrektur einer Ausrichtung der Reihe der Kameras ermittelt werden.

### Vorteilhafte Ausbildungen und Wirkungen der Erfindung

Die Erfindung ermöglicht es in vorteilhafter Weise, Flexodruckplatten bzw. deren mit Erhebungen ausgebildete Oberflächen exakt zu vermessen.

Im Rahmen einer Kalibrierung einer Vorrichtung zum Vermessen von Erhebungen einer drucktechnische Oberfläche, zum Beispiel einer Flexodruckform, kann es initial erforderlich sein, eine Reihe vorhandener Kameras relativ, also zueinander gegenseitig auszurichten. Dies kann beispielsweise unter Verwendung eines gespannten Drahtes, wie in der DE102020111341A1 beschrieben, erfolgen.

Unter Einsatz der Erfindung kann eine Reihe von Kameras in vorteilhafter Weise absolut ausgerichtet werden, also beispielsweise gegenüber dem Rotationskörper bzw. dessen Lager oder Rotationsachse.

Die Erfindung kann in vorteilhafter Weise bei folgenden Vorgängen eingesetzt werden: dem Vermessen eines 3-D-Profils einer Druckformoberfläche, dem darauf basierenden Berechnen von Einstellwerten einer Druckmaschine, dem Erkennen von Defekten auf einer Druckform und dem Visualisieren einer Druckform für einen Bediener, vorzugsweise zusammen mit Details des Vermessens und Erkennens.

### Weiterbildungen der Erfindung

Im Folgenden werden bevorzugte Weiterbildungen der Erfindung als Vorrichtung (kurz: Weiterbildungen) beschrieben. Diese können - wo es sich nicht technisch ausschließt - auch untereinander kombiniert werden.

Eine Weiterbildung kann sich dadurch auszeichnen, dass die beiden Lineale transparent sind, z.B. aus Glas gefertigt. Eine Weiterbildung kann sich dadurch auszeichnen, dass die Messvorrichtung einen ersten und einen zweiten Spiegel umfasst. Eine Weiterbildung kann sich dadurch auszeichnen, dass der erste Spiegel bezüglich der Lichtquelle derart hinter dem ersten Lineal angeordnet ist, dass Licht, welches von der Lichtquelle kommend durch das erste Lineal hindurchtritt, am ersten Spiegel gespiegelt wird und zu wenigstens einer Kamera gelangt. Eine Weiterbildung kann sich dadurch auszeichnen, dass der zweite Spiegel bezüglich der Lichtquelle derart hinter dem zweiten Lineal angeordnet ist, dass Licht, welches von der Lichtquelle kommend durch das zweite Lineal hindurchtritt, am zweiten Spiegel gespiegelt wird und zu wenigstens einer Kamera gelangt.

Eine Weiterbildung kann sich dadurch auszeichnen, dass beide Lineale in einer ersten Ebene angeordnet sind, in welcher auch die Rotationsachse liegt. Eine Weiterbildung kann sich dadurch auszeichnen, dass die Ebene eine im wesentlichen horizontale Ebene ist.

Eine Weiterbildung kann sich dadurch auszeichnen, dass die Lichtquelle bewegbar ist. Eine Weiterbildung kann sich dadurch auszeichnen, dass die Kameras bewegbar sind. Eine Weiterbildung kann sich dadurch auszeichnen, dass die Lichtquelle und die Kameras gemeinsam bewegbar sind. Eine Weiterbildung kann sich dadurch auszeichnen, dass die Lichtquelle und die Kameras in einer zweiten Ebene bewegbar sind, welche im Wesentlichen parallel zur ersten Ebene liegt.

Im Folgenden werden bevorzugte Weiterbildungen der Erfindung als Verfahren (kurz: Weiterbildungen) beschrieben. Diese können - wo es sich nicht technisch ausschließt - auch untereinander kombiniert werden.

Eine Weiterbildung kann sich dadurch auszeichnen, dass die beiden Lagewerte kontinuierlich ermittelt werden.

### Ausführungsbeispiele zur Erfindung und Figuren

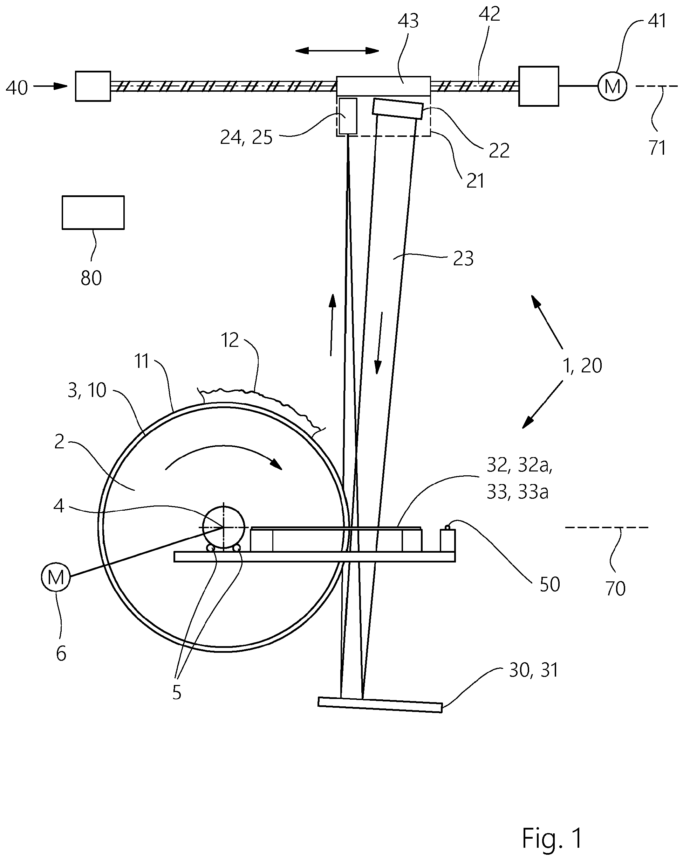

Die Figuren 1 und zeigen ein bevorzugtes Ausführungsbeispiel der Erfindung und der Weiterbildungen. Einander entsprechende Merkmale sind in den Figuren mit denselben Bezugszeichen versehen.
Figur 1 zeigt eine (Quer-) Schnittansicht eines bevorzugtes Ausführungsbeispiel einer erfindungsgemäßen Vorrichtung bei der Durchführung eines bevorzugten Ausführungsbeispiels eines erfindungsgemäßen Verfahrens.
Figur 2 zeigt eine (Längs-) Schnittansicht der in Figur 1 dargestellten Vorrichtung.

Die in Figur 1 gezeigte Vorrichtung 1 dient dem Vermessen der Topografie eines Rotationskörper 2 bzw. einer rotierenden Oberfläche 3. Der Rotationskörper 2 weist eine Rotationsachse 4 auf und ist auf beiden Seiten (erste Seite7 und zweite Seite 8) drehbar in Lagern 5 gelagert. Ein erster Motor 6 dient dem Antrieb der Rotation während der Vermessung.

Auf dem Rotationskörper 2 ist wenigstens eine Druckform 10 direkt oder auf einer Hülse aufgenommen. Eine (Außen-) Oberfläche 11 der Druckform 10 bildet wenigstens einen Abschnitt der Oberfläche 3. Auf der Oberfläche 11 sind Erhebungen 12 ausgebildet, zum Beispiel druckende Stellen einer Flexodruckform; diese bilden die zu vermessende Topografie.

Die Vorrichtung 1 umfasst weiterhin eine Messeinrichtung 20. Diese wiederum umfasst einen Träger 21 für eine Lichtquelle 22, welche Licht 23 aussendet, und für eine Reihe 24 von Kameras 25, welche bevorzugt benachbart zueinander angeordnet sind. Der Träger 21 samt Lichtquelle 22 und Kameras 25 kann senkrecht zur Rotationsachse 4 bewegt werden, wozu ein Linearantrieb 40 mit einem zweiten Motor 41, einer Spindel 42 und einer Spindelmutter 43 vorgesehen sein können.

Die Vorrichtung 1 umfasst weiterhin einen ersten Spiegel 30 und einen zweiten Spiegel 31, jeweils auf einer der beiden Seiten 7 oder 8 angeordnet. Die beiden Spiegel 30, 31 reflektieren das Licht 23 von der Lichtquelle 22 zu den Kameras 25.

Im Strahlengang des reflektierten Lichts 23 befindet sich auf der ersten Seite 7 ein erstes Lineal 32 mit einer ersten Maßverkörperung 32a und auf der zweiten Seite 8 ein zweites Lineal 33 mit einer zweiten Maßverkörperung 33a. Die beiden Lineale 32 und 33 liegen bevorzugt in einer bevorzugt horizontalen ersten Ebene 70, in welcher auch die Rotationsachse 4 liegt. Die beiden Lineale 32 und 33 sind präzise angeordnet, bevorzugt mit einer Präzision im Mikrometerbereich.

Die Vorrichtung 1 umfasst auch einen gespannten Draht 50. Dieser kann verwendet werden, um die einzelnen Kameras 25 der Reihe 24 zuerst relativ zueinander auszurichten, wozu der Draht 50 von allen Kameras 25 in deren jeweiligen Kamerabildern erfasst wird. Auch der Draht 50 liegt bevorzugt in der ersten Ebene 70.

Die Lichtquelle 22 und die Kameras 25 liegen bevorzugt in einer zweiten Ebene 71; diese ist bevorzugt horizontal und parallel zur ersten Ebene 70 angeordnet.

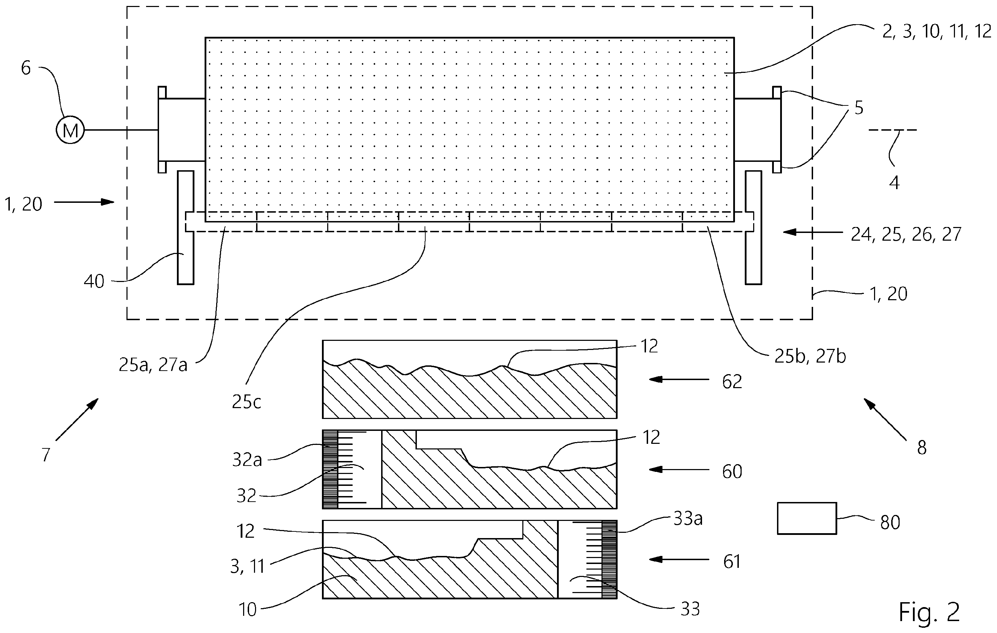

Die in Figur 2 gezeigte Vorrichtung 1 umfasst das oben bereits genannte erste Lineal 32 und zweite Lineal 33 auf gegenüberliegenden Seiten des Rotationskörpers 2, dessen strukturierte und zu vermessende Oberfläche 3 in Figur 2 erkennbar ist.

Die Reihe 24 der in Figur 1 dargestellten Kameras 25 korrespondiert zu einer Reihe 26 von (optischen) Erfassungsbereichen 27. Die erste Maßverkörperung 32a wird zumindest abschnittsweise von einer ersten Kamera 25a in deren ersten Erfassungsbereich 27a erfasst. Ebenso wird die zweite Maßverkörperung 33a zumindest abschnittsweise von einer zweiten Kamera 25b in deren zweiten Erfassungsbereich 27b erfasst. Dabei erzeugt die erste Kamera 25a ein erstes Bild 60 und die zweite Kamera 25b ein zweites Bild 61. Im ersten Bild 60 ist (beispielhaft links) ein Abschnitt der ersten Maßverkörperung 32a erkennbar; im zweiten Bild 61 ist (beispielhaft rechts) ein Abschnitt der zweiten Maßverkörperung 33a erkennbar. Die beiden Maßverkörperungen können bevorzugt im Mikrometerbereich ausgebildet sein. Die weiteren Kameras 25c erzeugen ebenfalls Bilder 62; auf diesen ist allerdings kein Abschnitt der Maßverkörperung erkennbar.

Die erfassten Bilder, insbesondere die beiden Bilder 60 und 61, werden bevorzugt an einen Rechner 80 übermittelt und von diesem ausgewertet. Der Rechner 80 kann (zum Beispiel unter Anwendung dem Fachmann bekannter digitaler Bildverarbeitungsprozesse) eine Schräglage der Reihe 24 von Kameras 25 erkennen bzw. deren Wert berechnen. Hierzu kann die Lage der Reihe 24 auf den beiden Seiten 7 und 8 relativ zu der jeweiligen Maßverkörperung verglichen werden. Daraufhin kann eine Korrektur der Schräglage erfolgen. Dies kann automatisiert oder händisch erfolgen. Auf diese Weise kann die Reihe 24 von Kameras 25 (neben der oben erwähnten relativen Ausrichtung der Kameras zueinander) absolut und bevorzugt im Mikrometerbereich ausgerichtet werden. Die absolute Ausrichtung der Reihe 24 von Kameras 25 erfolgt dabei bevorzugt parallel zur Rotationsachse 4. Daher sind die beiden Lineale 32 und 33 bevorzugt exakt (bevorzugt senkrecht) zur Rotationsachse 4 ausgerichtet und ortsfest montiert.

### Bezugszeichenliste

- 1: Vorrichtung
- 2: Rotationskörper, insbesondere Zylinder
- 3: Oberfläche
- 4: Rotationsachse
- 5: Lager
- 6: erster Motor
- 7: erste Seite
- 8: zweite Seite
- 10: Druckform
- 11: Oberfläche
- 12: Erhebungen
- 20: Messeinrichtung
- 21: Träger
- 22: Lichtquelle
- 23: Licht
- 24: Reihe
- 25: Kamera/-s
- 25a: erste Kamera
- 25b: zweite Kamera
- 25c: weitere Kameras
- 26: Reihe
- 27: Erfassungsbereich/-e
- 27a: erster Erfassungsbereich
- 27b: zweiter Erfassungsbereich
- 30: erster Spiegel
- 31: zweiter Spiegel
- 32: erstes Lineal
- 32a: erste Maßverkörperung
- 33: zweites Lineal
- 33a: zweite Maßverkörperung
- 40: Linearantrieb
- 41: zweiter Motor
- 42: Gewindestange bzw. Spindel
- 43: Spindelmutter
- 50: Gespannter Draht
- 60: Bild der ersten Kamera
- 61: Bild der zweiten Kamera
- 62: Bild einer weiteren Kamera
- 70: erste Ebene
- 71: zweite Ebene
- 80: Rechner

## Patentansprüche

1. Vorrichtung zum Vermessen von Erhebungen der Oberfläche eines als Zylinder, Walze, Hülse oder Platte für eine Druckmaschine ausgebildeten Rotationskörpers, mit einem ersten Motor (5) zum Rotieren des Rotationskörpers (2) um eine Rotationsachse (3) und mit einer Messeinrichtung (20), wobei die Messeinrichtung (20) zum berührungslosen Vermessen wenigstens eine Lichtquelle (22) und mehrere und im Wesentlichen in einer parallel zur Rotationsachse (3) ausgerichteten Reihe (24) angeordnete Kameras (25) mit einem jeweiligen Erfassungsbereich (27) umfasst, **dadurch gekennzeichnet,**
**dass** die Messeinrichtung (20) ein erstes und ein zweites Lineal (32, 33) umfasst, wobei das erste Lineal (32) auf einer ersten Seite (7) des Rotationskörpers (2) angeordnet ist und eine erste Maßverkörperung (32a) trägt und das zweite Lineal (33) auf einer gegenüberliegenden zweiten Seite (8) des Rotationskörpers (2) angeordnet ist und eine zweite Maßverkörperung (33a) trägt und wobei das erste Lineal (32) wenigstens abschnittsweise in einem ersten Erfassungsbereich (27a) einer ersten Kamera (25a) und das zweite Lineal (33) wenigstens abschnittsweise in einem zweiten Erfassungsbereich (27b) einer zweiten Kamera (25b) liegen.

2. Vorrichtung nach einem der vorhergehenden Ansprüche,
**dadurch gekennzeichnet,**
**dass** die beiden Lineale (32, 33) transparent sind.

3. Vorrichtung nach einem der vorhergehenden Ansprüche,
**dadurch gekennzeichnet,**
**dass** die Messvorrichtung (20) einen ersten und einen zweiten Spiegel (30, 31) umfasst.

4. Vorrichtung nach Anspruch 3,
**dadurch gekennzeichnet,**
**dass** der erste Spiegel (30) bezüglich der Lichtquelle (22) derart hinter dem ersten Lineal (32) angeordnet ist, dass Licht (23), welches von der Lichtquelle (22) kommend durch das erste Lineal (32) hindurchtritt, am ersten Spiegel (30) gespiegelt wird und zu wenigstens einer Kamera (25) gelangt.

5. Vorrichtung nach Anspruch 4,
**dadurch gekennzeichnet,**
**dass** der zweite Spiegel (31) bezüglich der Lichtquelle (22) derart hinter dem zweiten Lineal (33) angeordnet ist, dass Licht (23), welches von der Lichtquelle (22) kommend durch das zweite Lineal (33) hindurchtritt, am zweiten Spiegel (31) gespiegelt wird und zu wenigstens einer Kamera (25) gelangt.

6. Vorrichtung nach einem der vorhergehenden Ansprüche,
**dadurch gekennzeichnet,**
**dass** die Lichtquelle (22) bewegbar ist.

7. Vorrichtung nach Anspruch 6,
**dadurch gekennzeichnet,**
**dass** die Kameras (25) bewegbar sind.

8. Vorrichtung nach Anspruch 7,
**dadurch gekennzeichnet,**
**dass** die Lichtquelle (22) und die Kameras (25) gemeinsam bewegbar sind.

9. Vorrichtung nach einem der vorhergehenden Ansprüche,
**dadurch gekennzeichnet,**
**dass** die Lichtquelle (22) und die Kameras (25) in einer zweiten Ebene (71) bewegbar sind, welche parallel zu einer ersten Ebene (70) liegt, in welcher auch die Rotationsachse (3) liegt.

10. Verfahren zum Vermessen von Erhebungen der Oberfläche eines als Zylinder, Walze, Hülse oder Platte für eine Druckmaschine ausgebildeten Rotationskörpers,
**dadurch gekennzeichnet,**
**dass** eine Vorrichtung nach einem der vorhergehenden Ansprüche und mit einem Rechner (80) zum Einsatz kommt und dass während des Vermessens beide Lineale (32, 33) wenigstens abschnittsweise erfasst und dabei zwei Lagewerte der Reihe (24) der Kameras (25) zur rechentechnischen Korrektur einer Ausrichtung der Reihe (24) der Kameras (25) ermittelt werden.

11. Verfahren nach Anspruch 10,
**dadurch gekennzeichnet,**
**dass** die beiden Lagewerte kontinuierlich ermittelt werden.

## Claims

1. Device for measuring projections of the surface of a rotating body designed as a cylinder, roller, sleeve or plate for a printing press, with a first motor (5) for rotating the rotating body (2) about an axis of rotation (3) and with a measuring device (20), wherein the measuring device (20) comprises, for contactless measurement, at least one light source (22) and a plurality of cameras (25) arranged in a row (24) with a respective detection range (27), the row being aligned substantially parallel to the axis of rotation (3), **characterized in that**
the measuring device (20) comprises a first and a second rule (32, 33), wherein the first rule (32) is arranged on a first side (7) of the rotating body (2) and bears a first scale (32a), and the second rule (33) is arranged on an opposite second side (8) of the rotating body (2) and bears a second scale (33a), and wherein the first rule (32) lies at least in sections in a first detection range (27a) of a first camera (25a) and the second rule (33) lies at least in sections in a second detection range (27b) of a second camera (25b).

2. Device according to any one of the preceding claims,
**characterized in that**
the two rules (32, 33) are transparent.

3. Device according to any one of the preceding claims,
**characterized in that**
the measuring device (20) comprises a first and a second mirror (30, 31).

4. Device according to claim 3,
**characterized in that**
the first mirror (30) is arranged, with respect to the light source (22), behind the first rule (32) in such a way that light (23), coming from the light source (22) and passing through the first rule (32), is reflected by the first mirror (30) and reaches at least one camera (25).

5. Device according to claim 4,
**characterized in that**
the second mirror (31) is arranged, with respect to the light source (22), behind the second rule (33) in such a way that light (23), coming from the light source (22) and passing through the second rule (33), is reflected by the second mirror (31) and reaches at least one camera (25).

6. Device according to any one of the preceding claims,
**characterized in that**
the light source (22) is movable.

7. Device according to claim 6,
**characterized in that**
the cameras (25) are movable.

8. Device according to claim 7,
**characterized in that**
the light source (22) and the cameras (25) are jointly movable.

9. Device according to any one of the preceding claims,
**characterized in that**
the light source (22) and the cameras (25) are movable in a second plane (71), which lies parallel to a first plane (70), in which the axis of rotation (3) also lies.

10. Method for measuring projections of the surface of a rotating body designed as a cylinder, roller, sleeve or plate for a printing press,
**characterized in that**
a device according to any one of the preceding claims and with a computer (80) is used and that, during the measurement, both rules (32, 33) are detected at least in sections and, in the process, two position values of the row (24) of cameras (25) are determined for computer-aided correction of an alignment of the row (24) of cameras (25).

11. Method according to claim 10,
**characterized in that**
the two position values are determined continuously.

## Revendications

1. Dispositif de mesure d'élévations de la surface d'un corps rotatif conçu comme cylindre, rouleau, douille ou plaque pour une machine à imprimer, comprenant un premier moteur (5) destiné à faire tourner le corps rotatif (2) autour d'un axe de rotation (3) et comprenant un dispositif de mesure (20), sachant que le dispositif de mesure (20) comprend, pour une mesure sans contact, au moins une source lumineuse (22) et plusieurs caméras (25) disposées sur une rangée (24) essentiellement orientée parallèle à l'axe de rotation (3), avec une zone de détection (27) chacune,
**caractérisé en ce que**
le dispositif de mesure (20) comprend une première et une deuxième règle (32, 33), sachant que la première règle (32) est disposée sur un premier côté (7) du corps rotatif (2) et porte une première cote matérialisée (32a), et que la deuxième règle (33) est disposée sur un deuxième côté opposé (8) du corps rotatif (2) et qu'elle porte une deuxième mesure matérialisée (33a), et sachant que la première règle (32) se trouve au moins par sections dans une première zone de détection (27a) d'une première caméra (25a), et que la deuxième règle (33) se trouve au moins par sections dans une deuxième zone de détection (27b) d'une deuxième caméra (25b).

2. Dispositif selon l'une des revendications précédentes,
**caractérisé en ce que**
les deux règles (32, 33) sont transparentes.

3. Dispositif selon l'une des revendications précédentes,
**caractérisé en ce que**
le dispositif de mesure (20) comprend un premier et un deuxième miroir (30, 31).

4. Dispositif selon la revendication 3,
**caractérisé en ce que**
le premier miroir (30), par rapport à la source lumineuse (22), est disposé derrière la première règle (32) de telle manière que la lumière (23) provenant de la source lumineuse (22) et traversant la première règle (32) est réfléchie par le premier miroir (30) et parvient à au moins une caméra (25).

5. Dispositif selon la revendication 4,
**caractérisé en ce que**
le deuxième miroir (31), par rapport à la source lumineuse (22), est disposé derrière la deuxième règle (33) de telle manière que la lumière (23) provenant de la source lumineuse (22) et traversant la deuxième règle (33) est réfléchie par le deuxième miroir (31) et parvient à au moins une caméra (25).

6. Dispositif selon l'une des revendications précédentes,
**caractérisé en ce que**
la source lumineuse (22) est mobile.

7. Dispositif selon la revendication 6,
**caractérisé en ce que**
les caméras (25) sont mobiles.

8. Dispositif selon la revendication 7,
**caractérisé en ce que**
la source lumineuse (22) et les caméras (25) sont mobiles conjointement.

9. Dispositif selon l'une des revendications précédentes,
**caractérisé en ce que**
la source lumineuse (22) et les caméras (25) sont mobiles dans un deuxième plan (71) parallèle à un premier plan (70), dans lequel se trouve également l'axe de rotation (3).

10. Procédé de mesure d'élévations de la surface d'un corps rotatif conçu comme cylindre, rouleau, douille ou plaque pour une machine à imprimer,
**caractérisé en ce qu'**
un dispositif selon l'une des revendications précédentes et équipé d'un ordinateur (80) est utilisé, et qu'au cours de la mesure, les deux règles (32, 33) sont détectées au moins par sections, deux valeurs de position de la rangée (24) des caméras (25) étant alors déterminées pour la correction informatique d'un alignement de la rangée (24) des caméras (25).

11. Procédé selon la revendication 10,
**caractérisé en ce que**
les deux valeurs de position sont déterminées en continu.
